# FASCICULE DE BREVET EUROPEEN

(11) **EP 1 448 392 B1**
(45) Date de publication et mention de la délivrance du brevet: **07.07.2010**
(21) Numéro de dépôt: 02805788.3
(22) Date de dépôt: 20.11.2002
(51) Int. Cl.: B32B 37/20, B42D 15/00, D21H 21/40

(54) **PROCEDE DE FABRICATION D'UN ARTICLE COMPORTANT UNE FEUILLE ET AU MOINS UN ELEMENT DIRECTEMENT RAPPORTE SUR CETTE FEUILLE**
VERFAHREN ZUR HERSTELLUNG EINES ARTIKELS AUS EINER FOLIE UND MINDESTENS EINEM DIREKT DARAN BEFESTIGTEN ELEMENT
METHOD FOR MAKING AN ARTICLE COMPRISING A SHEET AND AT LEAST AN ELEMENT DIRECTLY MOUNTED THEREON

(30) Priorité: 20.11.2001 FR 0114986
(43) Date de publication de la demande: 25.08.2004
(73) Titulaire: Arjo Wiggins Security SAS, 92130 Issy les Moulineaux (FR)
(72) Inventeur: DOUBLET, Pierre, F-77160 Saint-Brice (FR)
(74) Mandataire: Tanty, François
(86) Numéro de dépôt international: PCT/FR2002/003962
(87) Numéro de publication internationale: WO 2003/055683

(56) Documents cités:
- FR-A- 2 757 313
- US-A- 4 889 366
- US-A- 5 637 858
- US-A- 5 944 927
- US-A- 6 060 428
- US-B1- 6 305 609

## Description

La présente invention a notamment pour objet un procédé de fabrication d'un article comportant une feuille et un élément de sécurité introduit dans la feuille.

L'invention concerne plus particulièrement, mais non exclusivement, l'intégration d'un élément tel qu'une puce électronique dans un article, par exemples un document de sécurité.

On peut citer un grand nombre d'exemples de structures comportant une puce électronique.

La demande internationale WO 99/54842 décrit un billet de banque en papier muni d'un fil de sécurité comportant une puce électronique en polymère organique semiconducteur.

On connaît par la demande de brevet allemand DE 198 33 746 un chèque de voyage obtenu en disposant une bande en matière polymère comportant une puce électronique sur une première couche de papier et en rapportant sur cette première couche une deuxième couche de papier, de manière à ce que la bande en polymère soit prise en sandwich entre les deux couches.

La demande de brevet allemand DE 196 01 358 décrit un article en papier comportant, noyé dans sa masse, un micromodule constitué d'un circuit intégré et d'un film métallique.

La demande de brevet allemand DE 196 30 648 décrit un billet de banque comportant une bande de sécurité interrompue et une puce électronique disposée entre deux portions de cette bande.

On connaît encore par la demande internationale WO 00/26856 une étiquette comportant une puce électronique logée dans un trou d'un substrat flexible. La puce est retenue dans ce trou au moyen d'une résine époxy.

La présente invention vise notamment à proposer un nouveau procédé de fabrication d'un article comportant une feuille et au moins un élément rapporté tel qu'une puce électronique, par exemple.

US 6 .305 609 et US 5 637 858 divulguent des procédés de fabrication de cartes à puce en matières plastiques, comme décrit dans le préambule des revendications 1 et 23.

L'invention a ainsi pour objet un procédé de fabrication d'un article selon la revendication 1.

La structure, outre le fait qu'elle puisse assurer le recouvrement de la cavité, peut définir une surface visible de l'article, cette surface pouvant par exemple constituer une sécurité.

La couche portant l'élément peut être en matière plastique ou en métal. Elle peut être constituée par un film plastique mince ou un film ou dépôt métallique, par exemple.

La couche portant l'élément peut également provenir de l'application d'une composition filmogène, notamment une composition filmogène magnétique ou iridescente.

La couche portant l'élément peut encore être à base de matière fibreuse.

Dans une mise en oeuvre préférée de l'invention, on assemble la feuille et l'élément par transfert, à chaud ou à froid. On peut par exemple transférer l'élément porté par la structure vers la feuille de la manière suivante :
- on presse la feuille en déplacement contre une matrice portée par un cylindre rotatif, la matrice étant déplacée de manière synchronisée avec la feuille,
- on amène la structure entre ladite matrice et la feuille de manière à ce que la structure vienne au contact de la feuille et que l'élément soit transféré dans la cavité de la feuille,
- éventuellement, on retire, après le transfert de l'élément vers la feuille, une ou plusieurs couches de la structure.

On peut par exemple ne conserver de la structure, après le transfert, que l'élément et une couche adhésive, cette dernière pouvant contribuer à la fixation de l'élément dans la cavité de la feuille.

Dans une mise en oeuvre particulière, la structure est amenée contre la feuille suivant une direction généralement transversale à la direction de déplacement de là feuille.

Dans un autre exemple de mise en oeuvre de l'invention, on assemble la feuille et la structure par collage.

Un moyen de repérage peut être utilisé pour permettre de déposer précisément l'élément dans la cavité de la feuille.

Un tel moyen de repérage peut comporter une impression ou un filigrane sur la feuille.

Lorsque la feuille et la structure sont assemblées par collage, la couche de la structure portant l'élément peut être réalisée à base d'une matière autre qu'une matière fibreuse, par exemple une matière plastique, la structure pouvant éventuellement être dépourvue de toute matière fibreuse.

Lorsque la feuille et la structure sont assemblées par collage et que la couche de la structure portant l'élément est à base de matière fibreuse, l'article peut être constitué par exemple par un article autre qu'un passeport, une carte d'identité, un livret de famille ou d'épargne.

Dans un exemple de mise en oeuvre de l'invention, la profondeur de la cavité est supérieure ou égale à l'épaisseur de l'élément.

Ainsi, l'article ne présente aucune surépaisseur au niveau de l'élément. L'élément, par exemple une puce électronique, peut ainsi être rendu difficilement détectable visuellement et au toucher.

De plus, lorsque la profondeur de la cavité est choisie de telle sorte que l'élément soit logé dans la cavité sans dépasser de celle-ci, l'élément est protégé d'éventuelles pressions exercées lors de la fabrication de l'article ou de son utilisation.

La cavité peut être traversante ou non.

La feuille peut être réalisée dans une matière choisie de manière à présenter des propriétés de résilience suffisantes pour protéger l'élément logé dans la cavité des contraintes mécaniques telles que des chocs ou des pressions exercés par une machine d'impression.

La structure peut recouvrir ou non toute une face de la feuille. La structure se présente sous la forme d'une bande ne recouvrant pas toute une face de la feuille. Cette bande peut s'étendre continûment entre deux bords opposés de l'article. La structure peut aussi ne pas s'étendre continûment entre des bords opposés de l'article et former un patch.

L'article peut comporter, au droit de l'élément, un relief détectable au toucher ou une zone présentant une dureté ou une souplesse détectable au toucher, afin de permettre par exemple une reconnaissance de l'article par un non-voyant.

La structure peut être transparente ou opaque, partiellement métallisée ou comporter une couche de métal recouvrant entièrement l'une de ses faces.

La structure peut également comporter un élément holographique et/ou diffractif. La structure peut aussi comporter un revêtement magnétique, métallique ou cristallin ou encore des pigments iridescents, thermochromiques et/ou piézochromiques.

Dans une mise en oeuvre particulière, la structure comporte des cristaux liquides.

La structure peut également recevoir au moins une impression, par exemple une impression d'un vernis ou d'une encre.

Dans une mise en oeuvre particulière, la structure comporte au moins une surface réfléchissante, cette dernière pouvant être continue ou discontinue.

La couche de la structure portant l'élément peut être fixée à une couche porteuse, avant transfert de l'élément sur la feuille. La couche porteuse peut être retirée après l'assemblage de la couche portant l'élément avec la feuille. La couche portant l'élément peut ainsi être transférée sur la feuille. La couche portant l'élément peut être constituée par un film, par exemple.

La couche porteuse peut éventuellement porter une pluralité de portions de film ou de matière fibreuse disposées de sorte qu'après leur transfert sur la feuille, ces portions soient espacées entre elles à la surface de la feuille. L'article peut comporter une ou plusieurs desdites portions. Chaque portion peut porter un ou plusieurs éléments, identiques ou non. Lesdites portions peuvent être séparées les unes des autres sur la couche porteuse, étant par exemple régulièrement espacées. Chaque portion peut présenter un contour polygonal, ovale, circulaire ou autre, et former un patch par exemple.

La structure peut être du type multicouche ou non. On peut par exemple amener au contact de la feuille une structure composite, encore appelée "foil", comportant initialement au moins les couches suivantes :
- une couche porteuse, par exemple en polyester,
- une couche de libération, par exemple en cire,
- éventuellement une couche de vernis contenant une résine et éventuellement un colorant,
- une couche de métal, par exemple en aluminium, de matière plastique ou de matière fibreuse, ou une couche provenant de l'application d'une composition filmogène, notamment une composition filmogène magnétique ou iridescente,
- une couche adhésive.

Une telle couche adhésive peut permettre la fixation, par exemple, de l'élément sur la feuille.

La feuille peut recevoir préalablement une couche de fond, encore appelée "primer" d'adhérence, permettant d'améliorer la fixation de l'élément sur la feuille et/ou les caractéristiques de surface de la feuille.

La structure peut être assemblée avec la feuille de diverses manières, par pression à chaud par exemple.

La nature de la couche de métal et son aspect de surface peuvent être choisis de manière à réfléchir la lumière à travers la couche de vernis coloré, le cas échéant.

La structure peut être constituée essentiellement par un film, notamment un film métallique ou un film en matière plastique par exemple, et la structure toute entière peut être laissée à demeure sur la feuille. Un tel film peut être unique.

La structure peut également être constituée par une couche provenant de l'application d'une composition filmogène.

La structure peut être constituée par un film unique ou une couche unique, en matière fibreuse ou non.

Dans une mise en oeuvre particulière de l'invention, l'élément comporte une puce électronique, permettant par exemple la transmission de données sans contact. Cette puce peut être reliée à une antenne comportant au moins une spire. L'antenne peut être portée par un film et s'étendre autour de la puce sur le film. En variante, l'antenne peut être disposée sur la puce elle-même. La puce peut être à base de silicium.

L'élément peut être constitué par un élément autre qu'une puce électronique.

Dans une mise en oeuvre particulière, l'élément est apte à réémettre un signal lorsque l'article est placé dans un champ électromagnétique ou lumineux prédéterminé.

L'élément peut comporter des particules magnétiques, métalliques ou plastiques, présentant une dureté ou une souplesse détectables au toucher.

L'élément peut encore comporter des cristaux ou des biomarqueurs.

Dans un exemple de mise en oeuvre de l'invention, la feuille comporte au moins une couche fibreuse, voire une seule couche fibreuse. La feuille peut comporter par exemple des fibres cellulosiques et/ou d'autres fibres naturelles, artificielles ou synthétiques. La feuille peut également comporter au moins une couche de matière plastique, par exemple.

Dans une mise en oeuvre particulière de l'invention, on creuse la cavité destinée à recevoir l'élément au moyen d'un laser. En variante, la cavité peut être creusée par abrasion mécanique.

En variante encore, on réalise la cavité lors de la formation de la feuille sur la machine à papier et l'on peut notamment réaliser la feuille de la manière suivante :
- on forme un premier jet de papier au contact d'une surface immergée dans une dispersion de matière fibreuse, ce premier jet comportant une zone d'épaisseur réduite, voire un trou pour former ladite cavité,
- on assemble le premier jet de papier avec un deuxième jet de papier.

L'élément peut être placé dans la cavité sur une machine de transfert à chaud ou à froid, avant séchage de l'article sur une machine à papier.

En variante, l'élément est transféré sur la feuille sur une machine de transfert intégrée à une machine d'imprimerie.

L'article obtenu peut comporter une pluralité de cavités recevant chacune un élément. Ces cavités peuvent recevoir des éléments différents et/ou ayant des fonctions complémentaires.

L'invention a encore pour objet un article obtenu par la mise en oeuvre du procédé décrit plus haut.

L'article peut constituer par exemple un billet de banque, un papier de sécurité, un bon cadeau, un coupon, un document de valeur, une étiquette de protection de marque ou de produit, une étiquette de traçabilité, cette liste n'étant pas limitative.

L'invention a encore pour objet un article selon la revendication 23.

Notamment lorsque l'article est constitué par un article autre qu'un passeport, une carte d'identité, un livret de famille ou d'épargne, la cavité de la feuille peut être recouverte par une couche de matière fibreuse, par exemple.

Lorsque la cavité est traversante, la feuille peut être recouverte de part et d'autre par une couche de matière fibreuse. Autrement dit, la feuille est prise en sandwich entre deux couches fibreuses.

L'invention pourra être mieux comprise à la lecture de la description détaillée qui va suivre, d'exemples de mise en oeuvre non limitatifs, et à l'examen du dessin annexé, sur lequel :
- la figure 1 représente schématiquement et partiellement, en coupe transversale, un article conforme à un premier exemple de mise en oeuvre de l'invention,
- la figure 2 représente schématiquement et partiellement, en coupe transversale, un article conforme à un deuxième exemple de mise en oeuvre de l'invention, comportant un relief détectable au toucher,
- la figure 3 représente schématiquement et partiellement, en coupe transversale, un article conforme à un troisième exemple de mise en oeuvre de l'invention, comportant également un relief détectable au toucher,
- la figure 4 est une coupe transversale, schématique et partielle, d'une structure pouvant être utilisée,
- la figure 5 représente schématiquement et partiellement un billet de banque conforme à l'invention,
- les figures 6 et 7 représentent schématiquement et partiellement des bons cadeau conformes à deux exemples de mise en oeuvre de l'invention,
- la figure 8 représente, schématiquement, un exemple d'installation permettant de réaliser une feuille avec des cavités débouchant sur une face,
- les figures 9 et 10 représentent partiellement et schématiquement, en coupe transversale, deux variantes de feuille pouvant être obtenues avec l'installation de la figure 8,
- la figure 11 illustre schématiquement le contre-collage d'une feuille et d'une structure,
- la figure 12 illustre schématiquement en coupe le transfert d'un élément vers une feuille, et
- la figure 13 représente schématiquement et partiellement un détail de la figure 12.

Dans toute la description, y compris les revendications, les expressions "comprenant un" et "comportant un" doivent être comprises comme signifiant "comportant au moins un", sauf si le contraire est spécifié.

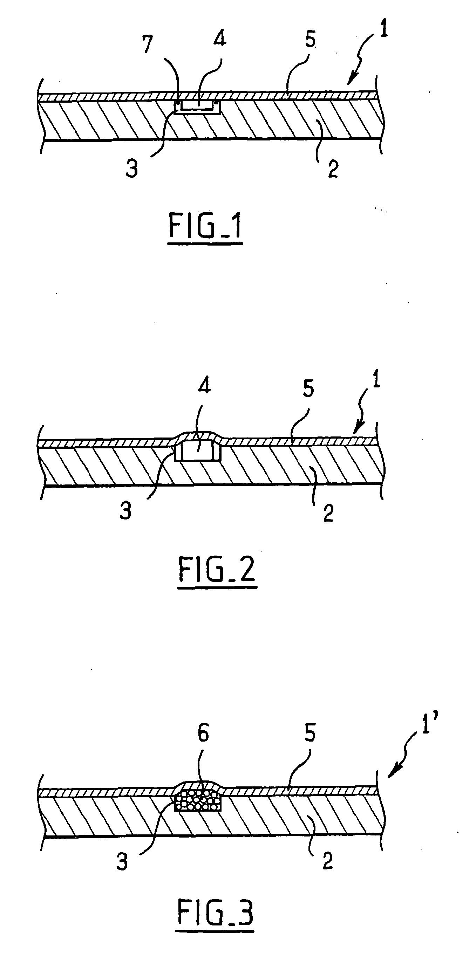

On a représenté sur la figure 1 un exemple d'article 1 conforme à l'invention, comportant une feuille 2 présentant sur une face une cavité 3, non-traversante, permettant de recevoir un élément tel qu'une puce électronique 4, fixé sur une structure 5 constituée par un film, par exemple en polyester.

La feuille 2 est réalisée dans l'exemple illustré à base de fibres, par exemple de cellulose, et peut aussi contenir, éventuellement, des fibres synthétiques ou artificielles. En variante, la feuille 2 peut être réalisée essentiellement à base d'un matériau autre qu'une matière fibreuse.

Dans l'exemple de la figure 1, la profondeur de la cavité 3 est supérieure à l'épaisseur de la puce 4, de sorte que l'article 1 ne présente aucune surépaisseur au droit de la puce 4.

En variante, la profondeur de la cavité 3 est inférieure à l'épaisseur de la puce 4, de manière à créer un relief à la surface de l'article 1, comme on peut le voir sur la figure 2. Ce relief peut être détectable au toucher, de manière à permettre à un non-voyant de reconnaître l'article 1.

La puce 4 peut être du type passif, permettant une transmission de données sans contact, et être reliée à une antenne 7 comportant au moins une spire. Cette antenne peut être réalisée par exemple directement sur le film 5, autour de la puce 4, permettant une détection de proximité ou de voisinage, par exemple une détection dont la portée est comprise entre 1 et 70 cm.

En variante, l'antenne peut être réalisée sur la puce elle-même, lorsqu'une détection à courte distance suffit, par exemple avec une portée supérieure à 1 mm mais inférieure à 1 cm environ.

La puce 4 est par exemple à base de silicium et peut présenter une épaisseur de 200 µm environ, par exemple.

La cavité 3 peut recevoir un élément autre qu'une puce électronique 4.

On a représenté sur la figure 3 un article 1' se différenciant de l'article 1 précédemment décrit par le fait que la cavité 3 reçoit des particules 6. Ces dernières peuvent être par exemple magnétiques ou non, métalliques ou en matière plastique.

Dans l'exemple illustré, les particules 6 sont en quantité suffisante pour créer à la surface de l'article l'un relief détectable au toucher.

La structure 5 peut présenter localement, au droit de la cavité 3, une souplesse ou une rigidité détectable au toucher, permettant ainsi à un non-voyant de reconnaître l'article.

L'élément placé dans la cavité 3 peut encore être constitué par un objet présentant une forme prédéterminée, n'ayant pour fonction que de créer un relief détectable au toucher.

La structure peut être constituée par exemple par un film unique en polyester, comme illustré plus haut. On ne sort pas du cadre de la présente invention en utilisant une structure différente, notamment une structure multicouche.

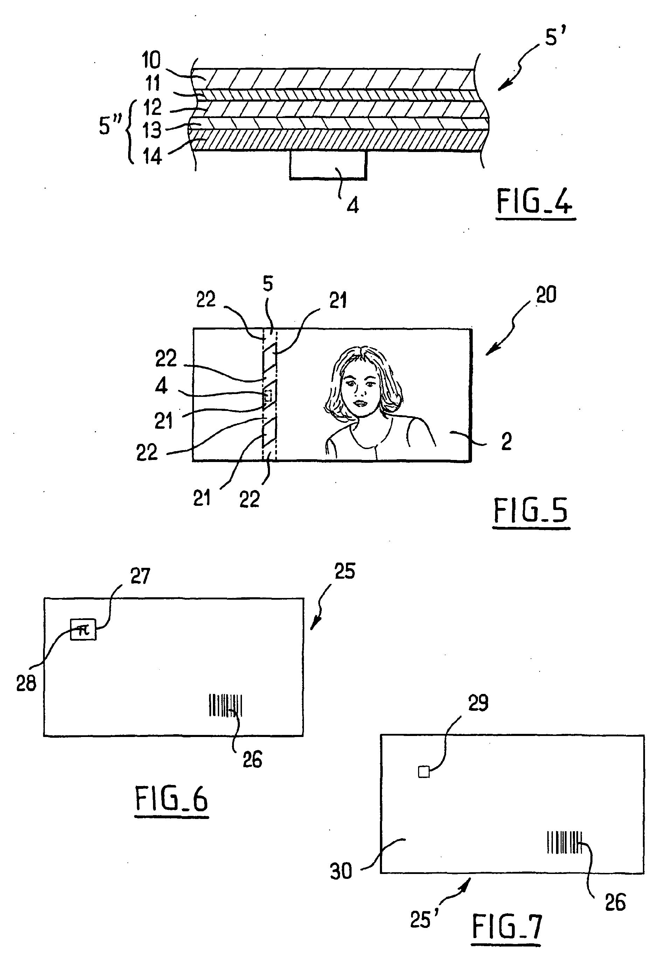

A titre d'exemple, on a représenté sur la figure 4 une structure composite 5', comportant :
- une couche porteuse 10 en polyester,
- une couche de libération 11, par exemple en cire,
- une couche de vernis 12 contenant une résine et éventuellement un colorant,
- une couche métallique 13, par exemple en aluminium,
- une couche adhésive 14 permettant la fixation de l'élément 4 sur la couche fibreuse 2. La couche adhésive 14 peut être à base d'une résine dite "hot-melt".

Dans l'exemple décrit, la couche porteuse 10 présente une épaisseur de 12 µm environ et l'épaisseur cumulée des couches 11 à 14 est de 2 à 3 µm environ.

Les couches 12, 13 et 14 forment un film 5" à transférer sur la feuille 2.

La structure 5' est encore appelée "foil" et elle permet d'assembler le film 5 " avec la feuille 2, par exemple par pression à chaud, opération durant laquelle la couche de libération 11 fond et permet la séparation de la couche porteuse 10 des autres couches. La chaleur apportée lors de cette opération provoque également l'activation de la couche adhésive 14, afin de thermocoller le film 5" sur la feuille 2.

La couche métallique 13, en aluminium par exemple, peut présenter un aspect de surface permettant de réfléchir la lumière à travers la couche de vernis coloré 12, créant ainsi un effet de couleur à la surface de l'article.

La couche 12 peut présenter un hologramme constitué par un réseau de diffraction. Ce dernier peut être réalisé au moyen d'une matrice d'une machine de transfert permettant de transférer le film 5" sur la feuille 2. En variante, l'hologramme peut être réalisé avant l'assemblage de la couche 12 avec les autres couches.

La couche métallique 13 peut être remplacée par une couche en matière plastique.

Le film 5 ou 5" peut recouvrir entièrement ou non une face de l'article.

Le film 5 ou 5" peut s'étendre continûment ou non entre deux bords opposés de l'article.

Le film 5 ou 5" peut former un patch sur l'article.

Pour illustrer quelques-unes une de ces possibilités, ou va maintenant décrire quelques exemples d'articles pouvant être obtenus en mettant en oeuvre l'invention.

On a représenté sur la figure 5 un billet de banque 20 comportant un film 5 ou 5" et une feuille 2.

Le film 5 ou 5" est constitué dans cet exemple par une bande s'étendant entre deux bords opposés du billet 20. Sur la face visible de cette bande 5 ou 5", on a réalisé une pluralité de surfaces réfléchissantes individuelles 21 ayant chacune une forme de parallélogramme.

Comme cela est décrit dans le brevet européen EP 0 522 217, on peut réaliser ces surfaces réfléchissantes 21 en transférant un film mince réfléchissant continu 5 ou 5" sur la feuille 2 puis en imprimant des zones opaques 22 sur ce film. Cette impression peut par exemple être réalisée au moyen d'une encre. Les zones opaques 22 peuvent en variante être obtenues par dissolution locale du film 5 ou 5". Le billet 20 peut comporter un ou plusieurs éléments logés dans des cavités sous le film 5 ou 5".

On a représenté sur les figures 6 et 7 deux bons cadeaux 25 et 25' comportant une feuille sur laquelle est imprimé un code à barres 26.

Le bon 25 comporte un film 27 de dimensions réduites par rapport à celles de la feuille, ce film 27 ayant une structure permettant de créer une image holographique 28. Ce film 27 recouvre une cavité de la couche fibreuse logeant une puce électronique, non représentée. Le film 27 constitue un patch.

Le bon 25' comporte un film 30, par exemple transparent, recouvrant entièrement la feuille sous-jacente. La puce 29 est logée dans une cavité de la couche fibreuse et peut être visible à travers le film 30 lorsque ce dernier est transparent.

La cavité recevant l'élément peut être réalisée de multiples manières.

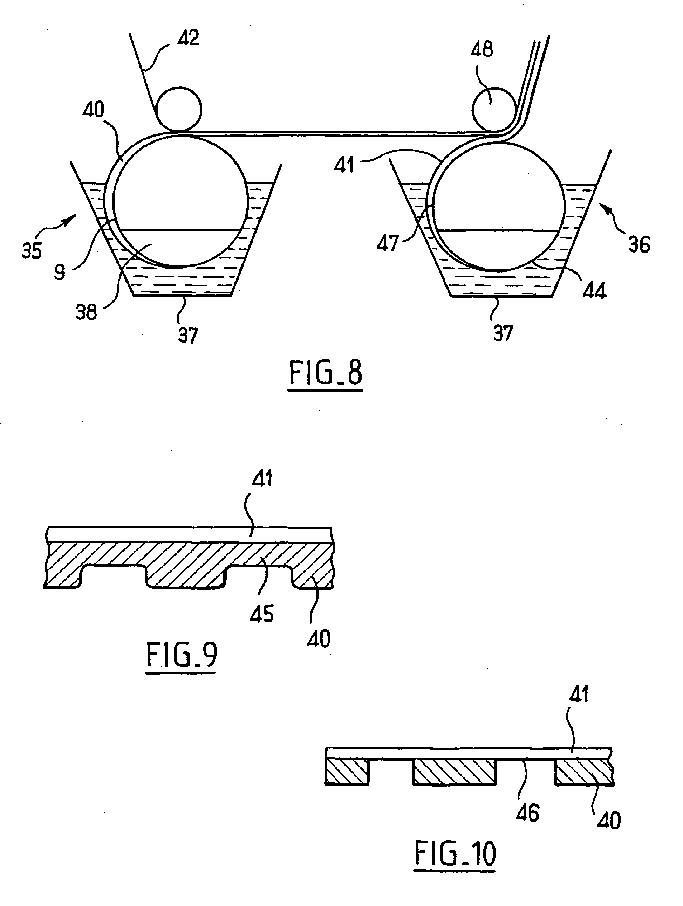

A titre d'exemple d'une possibilité parmi d'autres de réaliser une cavité, on va maintenant décrire en référence à la figure 8 un procédé permettant de réaliser une feuille comportant au moins une cavité débouchant sur une face.

On a représenté partiellement et schématiquement sur cette figure deux machines papetières 35 et 36, dites à forme ronde.

La première machine 35 comporte une cuve 37 contenant une suspension de fibres, par exemple des fibres de cellulose, dans laquelle est partiellement immergé un cylindre de toile rotatif 38 définissant une surface 39 au contact de laquelle se forme en continu un jet de papier 40 pris par un feutre preneur 42. La surface 39 comporte un embossage en relief, de manière à créer dans le premier jet 40 des zones d'épaisseur réduite 45, comme cela est illustré sur la figure 9, voire des trous 46, comme cela est illustré sur la figure 10, ces zones étant destinées à former des cavités de la feuille.

La deuxième machine 36 comporte, à l'instar de la machine 35, une cuve 37 et un cylindre de toile rotatif 44 définissant une surface 47 au contact de laquelle se forme un deuxième jet de papier 41. Les jets de papier 40 et 41 sont assemblés par exemple par passage entre la forme ronde 44 et un cylindre rotatif 48.

Un exemple d'une telle installation est décrit dans le brevet européen EP 0 687 324.

La feuille peut être découpée ultérieurement au format de l'article à réaliser.

On peut réaliser par d'autres moyens encore la cavité, par exemple en utilisant un laser ou une abrasion mécanique.

La structure et la feuille peuvent être réunies de multiples manières sans que l'on sorte du cadre de l'invention.

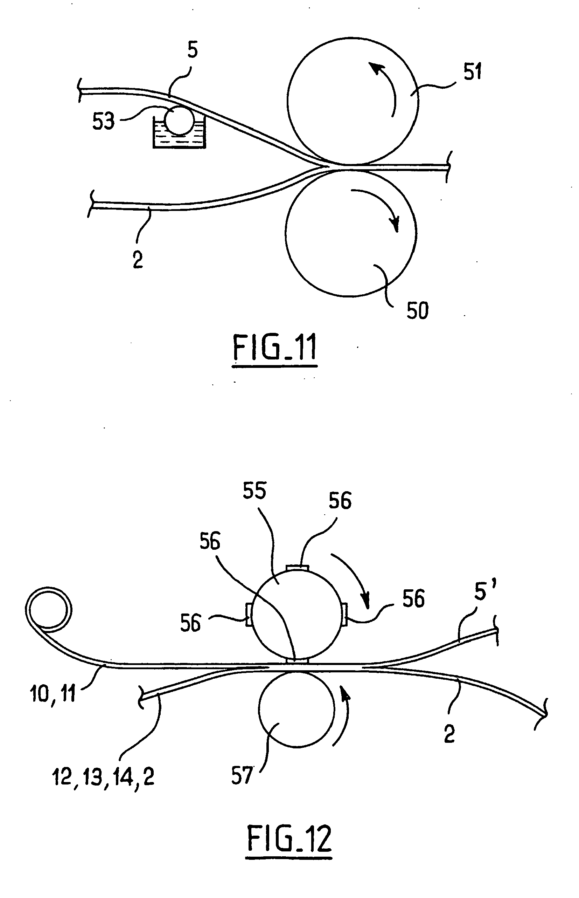

La structure et la feuille peuvent par exemple être assemblées par contre-collage, comme cela est illustré à la figure 11, par passage entre deux cylindres rotatifs 50 et 51. Sur cette figure, le film 5 est préalablement amené au contact d'une encolleuse 53. Le film 5 et la feuille 2 peuvent alors être positionnés l'un par rapport à l'autre par repérage, de sorte qu'un élément porté par le film 5 vienne se loger dans une cavité de la feuille. Le film 5 reste à demeure sur la feuille 2, dans l'exemple considéré.

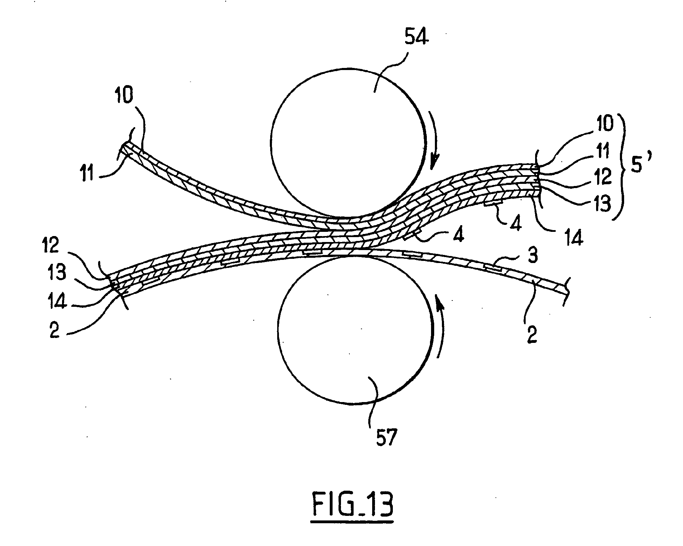

Dans le cas de la structure composite 5', le film 12, 13, 14 peut être transféré, à chaud par exemple, sur la feuille 2, comme cela est illustré aux figures 12 et 13. Dans un tel procédé de transfert, on peut entraîner la feuille 2 et la structure 5' avec la couche porteuse 10, 11 en déplacement dans le même sens au moyen d'une machine comportant un premier cylindre rotatif 55 portant des matrices 56 et un second cylindre rotatif 57. Le film 12, 13, 14 et la feuille 2 peuvent être assemblés lors du passage entre les cylindres 55 et 57. On peut voir sur la figure 13, qu'après passage entre les cylindres rotatifs 54 et 57, la couche porteuse 10 et la couche de libération 11 sont séparées des autres couches 12, 13 et 14, transférées sur la feuille 2.

La machine de transfert à chaud représentée aux figures 12 et 13 pourra, de manière non restrictive, fonctionner selon les principes de la machine « Foil-Jet » commercialisée par la société STEUER GmbH et décrite, notamment, dans la demande de brevet DE-19625064.

Le film 12, 13, 14 peut aussi être amené entre une matrice 56 et la feuille 2 dans une direction généralement transversale au déplacement de la feuille, comme décrit dans le brevet européen EP 0 473 635.

Bien entendu, l'invention n'est pas limitée aux exemples de mise en oeuvre qui viennent d'être décrits.

La ou les cavités de la feuille peuvent être traversantes ou non. Chaque cavité peut être fermée d'un côté seulement par un film, ou de part et d'autre par deux films. Chaque cavité traversante peut également être fermée d'un côté par un film et de l'autre par une couche fibreuse. Notamment lorsque l'élément est placé dans la cavité de la feuille par transfert, la couche de la structure portant l'élément peut être à base de matière fibreuse.

## Revendications

1. Procédé de fabrication d'un article (1 ; 1' ; 20 ; 25 ; 25') comportant une feuille (2) et au moins un élément (4 ; 6 ; 29) ayant une certaine épaisseur, comportant les étapes suivantes :
- fournir une feuille (2) avec au moins une cavité (3) débouchant sur une face,
- placer dans cette cavité (3) ledit élément,
**caractérisé par le fait que** la feuille (2) comporte au moins une couche fibreuse, et **par le fait que** l'on place dans la cavité (3) ledit élément en appliquant sur ladite face une structure (5 ; 5' ; 27 ; 30) se présentant sous la forme d'une bande ne recouvrant qu'une partie de la feuille et comportant au moins une couche portant l'élément, ladite structure étant positionnée par rapport à la feuille (2) de manière à ce que l'élément (4 ; 6 ; 29) vienne se loger au moins partiellement dans la cavité (3).

2. Procédé selon la revendication 1, **caractérisé par le fait que** la feuille et l'élément sont assemblés par transfert.

3. Procédé selon la revendication 1 ou 2, **caractérisé par le fait que** la couche de la structure portant l'élément est en matière plastique.

4. Procédé selon la revendication 1 ou 2, **caractérisé par le fait que** la couche de la structure portant l'élément est métallique.

5. Procédé selon la revendication 1 ou 2, **caractérisé par le fait que** la couche de la structure portant l'élément est à base de matière fibreuse.

6. Procédé selon l'une quelconque des revendications 1 à 5, **caractérisé par le fait que** la couche de la structure portant l'élément provient de l'application d'une composition filmogène, notamment une composition filmogène magnétique ou iridescente.

7. Procédé selon l'une quelconque des revendications précédentes, **caractérisé par le fait que** la profondeur de la cavité (3) est supérieure ou égale à celle de l'élément.

8. Procédé selon l'une quelconque des revendications précédentes, **caractérisé par le fait que** l'article (1) ne présente aucune surépaisseur au niveau de l'élément.

9. Procédé selon l'une quelconque des revendications 1 à 7, **caractérisé par le fait que** l'article (1 ; 1') comporte, au droit de l'élément, un relief détectable au toucher.

10. Procédé selon l'une quelconque des revendications précédentes, **caractérisé par le fait que** l'article comporte une zone présentant une dureté ou une souplesse détectables au toucher.

11. Procédé selon l'une quelconque des revendications précédentes, **caractérisé par le fait que** la cavité est traversante.

12. Procédé selon l'une quelconque des revendications 1 à 10, **caractérisé par le fait que** la cavité (3) est non traversante.

13. Procédé selon l'une quelconque des revendications précédentes, **caractérisé par le fait que** la structure (27) comporte au moins l'un des éléments suivants : un élément holographique et/ou diffractif (28), un revêtement magnétique, métallique ou cristallin, des cristaux liquides, une impression d'un vernis ou d'une encre, des pigments iridescents, des pigments thermochromiques et/ou piézochromiques, au moins une surface réfléchissante (21).

14. Procédé selon l'une quelconque des revendications précédentes, **caractérisé par le fait que** la structure comporte un film de matière plastique, notamment de polyester.

15. Procédé selon la revendication 1, **caractérisé par le fait que** la couche portant l'élément est l'unique couche de la structure.

16. Procédé selon l'une quelconque des revendications 1 à 14, **caractérisé par le fait que** la couche portant l'élément est fixée à une couche porteuse, avant transfert de l'élément sur la feuille.

17. Procédé selon la revendication 16, **caractérisé par le fait que** la couche porteuse comporte une pluralité de portions de film ou de matière fibreuse disposées de sorte qu'après leur transfert sur la feuille, ces portions soient espacées entre elles à la surface de la feuille.

18. Procédé selon l'une des revendications 16 et 17, **caractérisé par le fait que** l'on amène au contact de la feuille une structure (5') comportant initialement au moins les couches suivantes :
- une couche porteuse (10),
- une couche de libération (11),
- éventuellement une couche de vernis (12) contenant une résine et éventuellement un colorant,
- une couche de métal (13), de matière plastique ou de matière fibreuse, ou une couche provenant de l'application d'une composition filmogène, notamment une composition filmogène magnétique ou iridescente,
- une couche adhésive (14).

19. Procédé selon l'une quelconque des revendications précédentes, **caractérisé par le fait que** ledit élément comporte une puce électronique (4) permettant la transmission de données sans contact.

20. Procédé selon l'une quelconque des revendications 1 à 18, **caractérisé par le fait que** ledit élément comporte des particules magnétiques ou non, métalliques ou en plastique, des cristaux ou des biomarqueurs.

21. Procédé selon l'une quelconque des revendications précédentes, **caractérisé par le fait que** l'on réalise la cavité lors de la formation de la feuille sur une machine à papier.

22. Procédé selon la revendication précédente, **caractérisé par le fait que** l'on réalise la feuille de la manière suivante :
- on forme un premier jet de papier (40) au contact d'une surface immergée (39) dans une dispersion de matière fibreuse, ce premier jet comportant une zone d'épaisseur réduite (45), voire un trou (46), destiné à définir ladite cavité (3),
- on assemble le premier jet de papier avec un deuxième jet de papier (41).

23. Article comportant une feuille (2), présentant au moins une cavité logeant au moins partiellement un élément ayant une certaine épaisseur, cette cavité étant recouverte par une structure (5) comportant au moins une couche de matière plastique, de métal ou de matière fibreuse, ou une couche provenant de l'application d'une composition filmogène, notamment une composition filmogène magnétique ou iridescente, **caractérisé par le fait que** la feuille (2) comporte au moins une couche fibreuse et **par le fait que** la structure (5) se présente sous la forme d'une bande ne recouvrant qu'une partie de la feuille.

## Claims

1. Method for making an article (1; 1'; 20; 25; 25') comprising a sheet and at least an element (4; 6; 29) having a certain thickness comprising the following steps:
- supply a sheet (2) with at least a cavity (3) opening onto a face,
- place said element in that cavity (3),
**characterised in that** the sheet (2) comprises at least a fibrous layer, and **in that** said element is placed in the cavity (3) by applying to said face a structure (5; 5'; 27; 30) in the form of a strip covering only a part of the sheet and comprising at least a layer supporting the element, said structure being positioned in relation to the sheet (2) so that the element (4; 6; 29) becomes housed at least partially in the cavity (3).

2. Method according to claim 1, **characterised in that** the sheet and the element are joined by transfer.

3. Method according to claim 1 or 2, **characterised in that** the layer of the structure supporting the element is of plastic.

4. Method according to claim 1 or 2, **characterised in that** the layer of the structure supporting the element is of metal.

5. Method according to claim 1 or 2, **characterised in that** the layer of the structure supporting the element is fibrous material based.

6. Method according to any of claims 1 to 5, **characterised in that** the layer of the structure supporting the element is produced by application of a film-forming composition, in particular a magnetic or iridescent film-forming composition.

7. Method according to any of the preceding claims, **characterised in that** the depth of the cavity (3) is greater than or equal to that of the element.

8. Method according to any of the preceding claims, **characterised in that** the article (1) has no excess thickness at the element.

9. Method according to any of claims 1 to 7, **characterised in that** the article (1; 1') has a bulge detectable to the touch, which is level with the element.

10. Method according to any of the preceding claims, **characterised in that** the article contains an area having a hardness or flexibility detectable to the touch.

11. Method according to any of the preceding claims, **characterised in that** the cavity is continuous.

12. Method according to any of claims 1 to 10, **characterised in that** the cavity (3) is non-continuous.

13. Method according to any of the preceding claims, **characterised in that** the structure (27) comprises at least one of the following elements: a holographic and/or diffractive element (28), a magnetic, metallic or crystalline coating, liquid crystals, a varnish or ink print, iridescent pigments, thermochromic and/or piezochromic pigments, at least one reflective surface (21).

14. Method according to any of the preceding claims, **characterised in that** the structure comprises a film of plastic, particularly polyester.

15. Method according to claim 1, **characterised in that** the layer supporting the element is the only layer of the structure.

16. Method according to any of claims 1 to 14, **characterised in that** the layer supporting the element is fixed to a support layer before transfer of the element onto the sheet.

17. Method according to claim 16, **characterised in that** the support layer comprises a plurality of film or fibrous material portions arranged so that after their transfer to the sheet these portions are interspaced on the surface of the sheet.

18. Method according to either of claims 16 and 17, **characterised in that** a structure (5') is brought into contact with the sheet and initially comprises at least the following layers:
- a support layer (10),
- a release layer (11),
- possibly a layer of varnish (12) containing a resin and possibly a colourant,
- a layer of metal (13), plastic or fibrous material, or a layer produced by application of a film-forming composition, particularly a magnetic or iridescent film-forming composition,
- an adhesive layer (14).

19. Method according to any of the preceding claims, **characterised in that** said element contains a microchip (4) to allow contactless data transmission.

20. Method according to any of claims 1 to 18, **characterised in that** said element contains magnetic or non-magnetic metal or plastic particles, crystals or biomarkers.

21. Method according to any of the preceding claims, **characterised in that** the cavity is produced during formation of the sheet on a paper machine.

22. Method according to the preceding claim, **characterised in that** the sheet is produced as follows:
- A first paper ply (40) is formed in contact with an immersed surface (39) in a dispersion of fibrous material, said first ply containing an area of reduced thickness (45), or even a hole (46), intended to define said cavity (3).
- The first paper ply is joined to a second paper ply (41).

23. Article comprising a sheet (2) having at least a cavity which at least partially houses an element having a certain thickness, said cavity being covered by a structure (5) comprising at least a layer of plastic, metal or fibrous material, or a layer produced by application of a film-forming composition, particularly a magnetic or iridescent film-forming composition, **characterised in that** the sheet (2) comprises at least a fibrous layer and **in that** the structure (5) is in the form of a strip covering only a part of the sheet.

## Patentansprüche

1. Verfahren zur Herstellung eines Gegenstands (1; 1 ; 20; 25; 25'), der ein Blatt (2) und wenigstens ein Element (4; 6; 29) einer bestimmten Dicke aufweist, wobei
ein Blatt (2) mit wenigstens einer auf einer Fläche freiliegenden Aushöhlung (3) bereitgestellt wird,
das Element in diese Aushöhlung (3) gelegt wird,
**dadurch gekennzeichnet, dass** das Blatt (2) wenigstens eine Faserschicht aufweist, und **dadurch**, dass beim Legen des Elements in die Aushöhlung (3) auf die Fläche eine Struktur (5; 5'; 27; 30) aufgebracht wird, die die Form eines Streifens hat, der nur einen Teil des Blattes überdeckt und wenigstens eine das Element haltende Schicht aufweist, wobei die Struktur gegenüber dem Blatt (2) so positioniert ist, dass das Element (4; 6; 29) wenigstens teilweise in der Aushöhlung (3) zum Liegen kommt.

2. Verfahren nach Anspruch 1, **dadurch gekennzeichnet, dass** das Blatt und das Element durch Übertragung zusammengebaut werden.

3. Verfahren nach Anspruch 1 oder 2, **dadurch gekennzeichnet, dass** die das Element haltende Schicht der Struktur aus Kunststoff ist.

4. Verfahren nach Anspruch 1 oder 2, **dadurch gekennzeichnet, dass** die das Element haltende Schicht der Struktur metallisch ist.

5. Verfahren nach Anspruch 1 oder 2, **dadurch gekennzeichnet, dass** die das Element haltende Schicht der Struktur auf Fasermaterial basiert.

6. Verfahren nach einem der Ansprüche 1 bis 5, **dadurch gekennzeichnet, dass** die das Element haltende Schicht der Struktur durch Verwendung einer Filmzusammensetzung hergestellt wird, insbesondere einer magnetischen oder irisierenden Filmzusammensetzung.

7. Verfahren nach einem der vorstehenden Ansprüche, **dadurch gekennzeichnet, dass** die Tiefe der Aushöhlung (3) mindestens so groß ist wie die des Elements.

8. Verfahren nach einem der vorstehenden Ansprüche, **dadurch gekennzeichnet, dass** der Gegenstand (1) an der Stelle des Elements keinerlei Übergang aufweist.

9. Verfahren nach einem der Ansprüche 1 bis 7, **dadurch gekennzeichnet, dass** der Gegenstand (1; 1') aufgrund des Elements ein fühlbares Relief aufweist.

10. Verfahren nach einem der vorstehenden Ansprüche, **dadurch gekennzeichnet, dass** der Gegenstand einen Bereich aufweist, der eine fühlbare Härte oder Weichheit hat.

11. Verfahren nach einem der vorstehenden Ansprüche, **dadurch gekennzeichnet, dass** die Aushöhlung durchgängig ist.

12. Verfahren nach einem der Ansprüche 1 bis 10, **dadurch gekennzeichnet, dass** die Aushöhlung (3) nicht durchgängig ist.

13. Verfahren nach einem der vorstehenden Ansprüche, **dadurch gekennzeichnet, dass** die Struktur (27) wenigstens eines der folgenden Elemente aufweist: ein holografisches und/oder diffraktives Element (28), eine magnetische, metallische oder kristalline Beschichtung, Flüssigkristalle, einen Lack- oder Tintenaufdruck, irisierende Pigmente, thermochrome und/oder piezochrome Pigmente, wenigstens eine Spiegelfläche (21).

14. Verfahren nach einem der vorstehenden Ansprüche, **dadurch gekennzeichnet, dass** die Struktur einen Film aus Kunststoffinaterial aufweist, insbesondere Polyester.

15. Verfahren nach Anspruch 1, **dadurch gekennzeichnet, dass** die das Element haltende Schicht die einzige Schicht der Struktur ist.

16. Verfahren nach einem der Ansprüche 1 bis 14, **dadurch gekennzeichnet, dass** die das Element haltende Schicht auf einer Trägerschicht befestigt wird, bevor das Element auf das Blatt übertragen wird.

17. Verfahren nach Anspruch 16, **dadurch gekennzeichnet, dass** die Trägerschicht mehrere Film- oder Fasermaterialabschnitte aufweist, die so angeordnet sind, dass sie nach ihrer Übertragung auf das Blatt in einem Abstand voneinander auf der Oberfläche des Blattes liegen.

18. Verfahren nach einem der Ansprüche 16 und 17, **dadurch gekennzeichnet, dass** eine Struktur (5') in Kontakt mit dem Blatt gebracht wird, die ursprünglich wenigstens die folgenden Schichten aufweist:
eine Trägerschicht (10),
eine Freigabeschicht (11),
optional eine Lackschicht (12), die ein Harz und optional einen Farbstoff enthält,
eine Schicht aus Metall (13), Kunststoff oder Fasermaterial oder eine Schicht, die durch Aufbringen einer Filmzusammensetzung hergestellt ist, insbesondere einer magnetischen oder irisierenden Filmzusammensetzung,
eine Klebeschicht (14).

19. Verfahren nach einem der vorstehenden Ansprüche, **dadurch gekennzeichnet, dass** das Element einen Elektronikchip (4) aufweist, der eine kontaktfreie Datenübertragung ermöglicht.

20. Verfahren nach einem der Ansprüche 1 bis 18, **dadurch gekennzeichnet, dass** das Element Partikel aufweist, die magnetisch oder unmagnetisch, metallisch oder aus Kunststoff, sowie Kristalle oder Biomarker sind.

21. Verfahren nach einem der vorstehenden Ansprüche, **dadurch gekennzeichnet, dass** die Aushöhlung durch Formung des Blattes mit einer Papiermaschine realisiert wird.

22. Verfahren nach dem vorstehenden Anspruch, **dadurch gekennzeichnet, dass** das Blatt auf folgende Weise hergestellt wird:
Bilden einer ersten Papierbahn (40) in Kontakt mit einer Fläche (39), die in eine Fasermaterialdispersion eingetaucht ist, wobei die erste Bahn einen Bereich reduzierter Dicke (45) oder sogar ein Loch (46) aufweist, das zur Definition der Aushöhlung (3) ausgelegt ist,
Zusammensetzen der ersten Papierbahn mit einer zweiten Papierbahn (41).

23. Gegenstand mit einem Blatt (2), das wenigstens eine Aushöhlung aufweist, die wenigstens teilweise ein Element bestimmter Dicke enthält, wobei die Aushöhlung von einer Struktur (5) überdeckt ist, die wenigstens eine Schicht aus Kunststofhnaterial, Metall oder Fasermaterial oder die durch Aufbringung einer Filmzusammensetzung, insbesondere einer magnetischen oder irisierenden Filmzusammensetzung, hergestellt ist, aufweist, **dadurch gekennzeichnet, dass** das Blatt (2) wenigstens eine Faserschicht aufweist und **dadurch**, dass die Struktur (5) die Form eines Streifens hat, der nur einen Teil des Blattes überdeckt.
